# EUROPEAN PATENT APPLICATION

(11) **EP 4 503 731 A1**
(43) Date of publication of application: **05.02.2025**
(21) Application number: 22934049.2
(22) Date of filing: 29.03.2022
(51) Int. Cl.: H04W 28/24

(54) **AUGMENTED REALITY SERVICE-BASED SESSION MANAGEMENT FUNCTION SELECTION METHOD, APPARATUS, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); LIU, Jianning, Beijing 100085 (CN); SHEN, Yang, Beijing 100085 (CN)
(74) Representative: Stöckeler, Ferdinand
(86) International application number: PCT/CN2022/083870
(87) International publication number: WO 2023/184194

(57) **Abstract**

The present disclosure relates to an augmented reality service-based session management function selection method, an apparatus, and a storage medium, the method comprising: executing SMF selection, the execution of the SMF selection comprising: on the basis of augmented reality service XRM service indication information or an XRM group identifier (ID), selecting an SMF. The present disclosure makes the SMF selection of an augmented reality service more reasonable, and improves the XRM service quality of a 5G system.

## Description

### TECHNICAL FIELD

The disclosure relates to technologies of a session management function (SMF) selection of an augmented reality (AR) service, more particularly to a method and an apparatus for selecting an SMF based on an AR service, and a storage medium.

### BACKGROUND

An XR service such as a mobile media service, or an augmented reality (AR)/ virtual reality (VR), and a service such as a cloud game, or a remote control of a video-based machine or a drone are expected to contribute more and more traffic to a 5G network. The XR service involves a multimodal data stream. Multimodal data refers to describe data which input by the same service/application from the same device or different devices, and those data may be output to one or more destination devices. Each data stream in the multimodal data often has a certain or even strong correlation, such as a synchronization of audio and video streams, a synchronization of tactile and visual and the like. There are some common characteristics in the data streams themselves of such type of media services, among different data streams, and in a requirement of the service data streams for network transmission. Effective identification and utilization of these characteristics may be more conducive to the transmission and control of the network and the service, as well as conducive to service security and user experience.

An extended reality media (XRM) service needs the 5GS system to comprehensively consider quality of service (QoS) characteristics of related data streams of the service, for example, to consider whether parameters, such as a delay critical guaranteed bit rate (GBR) data stream, a guaranteed flow bit rate (GFBR), a packet delay budget (PDB), a default maximum data burst volume (MDBV) and the like, may be met and coordinated simultaneously. For the XRM service involving a single user equipment (UE), the QoS characteristics and policy rules among a plurality of data streams of the UE are coordinated. For the XRM services involving a plurality of UEs, a consistency of QoS authorization and execution among the plurality of UEs is guaranteed. Presently, the 5GS system has no corresponding QoS and policy mechanism to meet a corresponding service requirement, and there is no corresponding technical solution to support these functional characteristics of the XRM service.

### SUMMARY

For this, embodiments of the disclosure provide a method and an apparatus for selecting a session management function (SMF) based on an augmented reality (AR) service, and a storage medium.

According to a first aspect of the disclosure, a method for selecting an SMF based on an AR service, applied to a first network element, is provided. The method includes:
executing an SMF selection, in which executing the SMF selection includes selecting an SMF based on extended reality media (XRM) service indication information or an XRM group identification (ID).

In some exemplary embodiments of the disclosure, the first network element includes at least one of:
an access and mobility management function (AMF); or
a network repository function (NRF).

In some exemplary embodiments of the disclosure, in case that the first network element is the AMF, the method further includes:
when an SMF selection function in the AMF selects the SMF, selecting the same SMF for a session that supports an XRM service capability or has the same XRM group ID.

In some exemplary embodiments of the disclosure, the method further includes:
adding information in SMF selection subscription information in a unified data management (UDM): selecting the same SMF for a plurality of sessions with the XRM service indication information and/or the same XRM group ID.

In some exemplary embodiments of the disclosure, in case that the first network element is the AMF, the method further includes:
in local configuration information of the AMF or SMF subscription information in a UDM, taking the XRM service indication information and/or XRM group ID as an input of the SMF selection for selecting the SMF.

In some exemplary embodiments of the disclosure, the method further includes:
selecting, by the AMF, the same SMF for a session related to the XRM service indication information or the XRM group ID.

In some exemplary embodiments of the disclosure, selecting the same SMF for the session that supports the XRM service capability or has the same XRM group ID includes:
selecting the same SMF for a plurality of sessions with the same data network name (DNN) and/or the same single network slice selection auxiliary information (S-NSSAI) and/or the same XRM group ID.

In some exemplary embodiments of the disclosure, the XRM group ID is capable of reusing a group ID in an existing network.

In some exemplary embodiments of the disclosure, in case that the SMF is not selected for the session related to the XRM service indication information or the XRM group ID, the SMF is selected.

In some exemplary embodiments of the disclosure, in case that the SMF has been selected for the session related to the XRM service indication information or the XRM group ID, the same SMF is selected for a current related session.

In some exemplary embodiments of the disclosure, in case that the SMF has been selected for the session related to the XRM service indication information or the XRM group ID, and the selected SMF is not capable of meeting a quality of service (QoS) requirement of an XRM service, an SMF is re-selected, and SMF reselection is initiated; and in case that there is a migratable protocol data unit (PDU) session in the old SMF, the PDU session in the old SMF is migrated to a new SMF.

In some exemplary embodiments of the disclosure, the method further includes:
in case that the NRF executes an SMF discovery selection, selecting, by the AMF, the same SMF for a session related to the XRM service indication information or the XRM group ID through the NRF.

In some exemplary embodiments of the disclosure, in case that the first network element is the NRF, and the method further includes:
registering the SMF to the NRF, and obtaining a profile, in which SMF selection information of the NRF includes the XRM service indication information and/or the XRM group ID; and
marking, by the NRF, that the SMF is available.

According to a second aspect of the disclosure, an apparatus for selecting an SMF based on an AR service, applied to a first network element, is provided. The apparatus includes:
an executing unit, configured to execute an SMF selection, in which executing the SMF selection includes selecting an SMF based on XRM service indication information or an XRM group ID.

In some exemplary embodiments of the disclosure, the first network element includes at least one of:
an AMF; or
a NRF.

In some exemplary embodiments of the disclosure, in case that the first network element is the AMF, the apparatus further includes:
a first selecting unit, applied in an SMF selection function in the AMF, and configured to, when selecting the SMF, select the same SMF for a session that supports an XRM service capability and/or has the same XRM group ID.

In some exemplary embodiments of the disclosure, the apparatus further includes:
a setting unit, configured to adding information in SMF selection subscription information in a UDM: selecting the same SMF for a plurality of sessions with the XRM service indication information and/or the same XRM group ID.

In some exemplary embodiments of the disclosure, in case that the first network element is the AMF, the executing unit is further configured to:
in local configuration information of the AMF or SMF subscription information in a UDM, take the XRM service indication information and/or the XRM group ID as an input of the SMF selection for selecting the SMF.

In some exemplary embodiments of the disclosure, the apparatus further includes:
a second selecting unit, configured to select the same SMF for the session related to the XRM service indication information or the XRM group ID.

In some exemplary embodiments of the disclosure, the first selecting unit is further configured to:
select the same SMF for a plurality of sessions with the same DNN and/or the same S-NSSAI and/or the same XRM group ID.

In some exemplary embodiments of the disclosure, the XRM group ID is capable of reusing a group ID in an existing network.

In some exemplary embodiments of the disclosure, the second selecting unit is further configured to:
select the SMF in case that the SMF is not selected for the session related to the XRM service indication information or the XRM group ID.

In some exemplary embodiments of the disclosure, the second selecting unit is further configured to select the same SMF for a current related session in case that the SMF has been selected for the session related to the XRM service indication information or the XRM group ID.

In some exemplary embodiments of the disclosure, the second selecting unit is further configured to: re-select an SMF and initiate an SMF reselection in case that the SMF has been selected for the session related to the XRM service indication information or the XRM group ID, and the selected SMF is not capable of meeting a QoS requirement of an XRM service; and migrate, in case that there is a migratable PDU session in the old SMF, the PDU session in the old SMF to a new SMF.

In some exemplary embodiments of the disclosure, the apparatus further includes:
a third selecting unit, configured to select the same SMF for the session related to the XRM service indication information or the XRM group ID through the NRF, in case that the NRF executes an SMF discovery selection.

In some exemplary embodiments of the disclosure, in case that the first network element is the NRF, the SMF is registered to the NRF, and a profile is obtained, in which SMF selection information of the NRF includes the XRM service indication information and/or the XRM group ID; and
the NRF marks the SMF is available.

According to a third aspect of the disclosure, a storage medium having an executable program stored thereon is provided. When the executable program is executed by a processor, steps of the method for selecting the SMF selection based on the AR service are implemented.

According to the technical solution of the embodiments of the disclosure, the XRM service indication information or the XRM group ID based on the AR service is set in an SMF selection policy. In this way, an optimal SMF policy may be selected during providing session establishment for the XRM service, thereby improving the QoS of the XRM service of the 5G system.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram illustrating a communication system according to an exemplary embodiment of the disclosure.
FIG. 2 is a flow chart illustrating a method for selecting a session management function (SMF) based on an augmented reality (AR) service according to an exemplary embodiment of the disclosure.
FIG. 3 is a flow chart illustrating a method for selecting an SMF based on an AR service according to an exemplary embodiment of the disclosure.
FIG. 4 is a flow chart illustrating a method for selecting an SMF based on an AR service according to an exemplary embodiment of the disclosure.
FIG. 5 is a flow chart illustrating a method for selecting an SMF based on an AR service according to an exemplary embodiment of the disclosure.
FIG. 6 is a block diagram illustrating an apparatus for selecting an SMF based on an AR service according to an exemplary embodiment of the disclosure.
FIG. 7 is a block diagram illustrating a user equipment (UE) according to an exemplary embodiment of the disclosure.

### DETAILED DESCRIPTION

Exemplary embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following exemplary embodiments do not represent all implementations consistent with embodiments of the disclosure. Instead, they are merely examples of apparatuses and methods consistent with some aspects of embodiments of the disclosure as detailed in the appended claims.

The term employed in embodiments of the disclosure is merely for the purpose of describing a detailed embodiment, and is not intended to limit the disclosure. As used in embodiments of the disclosure and the appended claims, a singular form "a" or "the" is also intended to include plural forms, unless the context clearly indicates other meaning. It should also be understood that, the term "and/or" as used herein refers to including any or all possible combinations of one or more associated listed items.

It should be understood that, although terms "first, second, third and the like" may be employed in embodiments of the disclosure to describe various kinds of information, the information should not be limited to these terms. These terms are merely used to distinguish the same type of information from each other. For example, without departing from a scope of embodiments of the disclosure, first information may also be called second information, and similarly, the second information may also be called first information. Depending on the context, the word "if' as used herein may be interpreted as "when" or "in a case that..." or "in response to a determination".

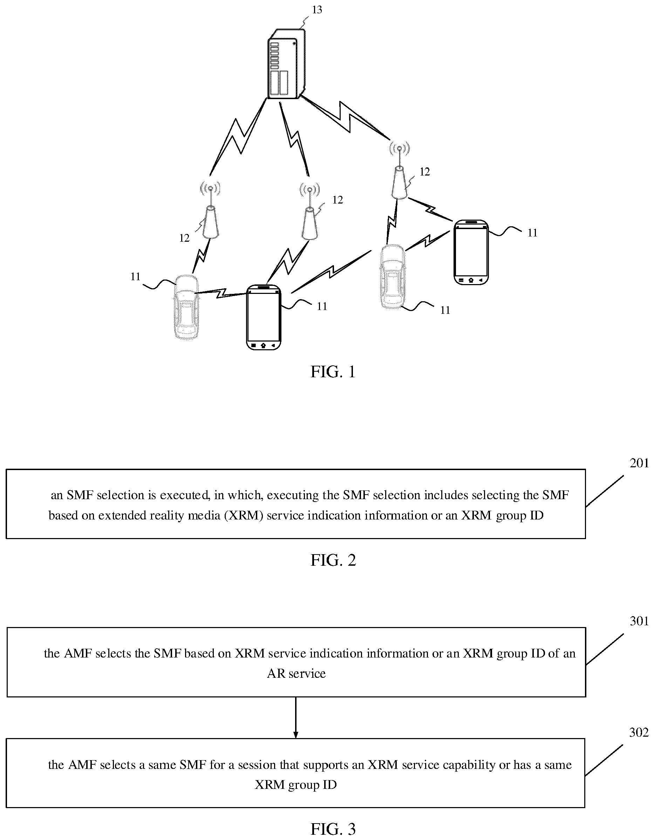

Referring to FIG. 1, FIG. 1 is a schematic diagram illustrating a wireless communication system according to embodiments of the disclosure. As illustrated in FIG. 1, the wireless communication system is a communication system based on a cellular mobile communication technology, and may include several terminals 11 and several base stations 12.

The terminal 11 may be a device that provides voice and/or data connectivity to a user. The terminal 11 can communicate with one or more core networks via a radio access network (RAN). The terminal 11 can be an Internet of Things terminal, such as a sensor device, a mobile phone (or referred to as a "cellular" phone) and a computer with an Internet of Things terminal. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may be a device of an unmanned aerial vehicle. Alternatively, the terminal 11 may be a vehicle-mounted device, for example, a driving computer with a wireless communication function, or a wireless communication device externally connected with a driving computer. Alternatively, the terminal 11 may be a roadside device, such as a street lamp, a signal lamp or other roadside devices with a wireless communication function.

The base station 12 may be a network side device in the wireless communication system. The wireless communication system can be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system can be referred to as a new generation-radio access network (NG-RAN), or a MTC system.

The base station 12 may be an evolved base station (eNB) used in the 4G system. Alternatively, the base station 12 may be a centralized distributed architecture base station (gNB) used in the 5G system. When the base station 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 12 is not limited in the embodiments of the disclosure.

A wireless connection can be established between the base station 12 and the terminal 11 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the terminals 11, for example, a vehicle to vehicle (V2V) communication, a vehicle to infrastructure (V2I) communication and a vehicle to pedestrian (V2P) communication in a vehicle to everything (V2X) communication.

In some embodiments, the wireless communication system may further include a network management device 13.

An executive subject involved in embodiments of the disclosure include, but is not limited to, a user equipment (UE) in a cellular mobile communication system, a base station for cellular mobile communication, and the like.

FIG. 2 is a flow chart illustrating a method for selecting a session management function (SMF) based on an augmented reality (AR) service according to an exemplary embodiment of the disclosure. As illustrated in FIG. 2, FIG. 2 of the embodiments of the disclosure illustrates a method for selecting an SMF based on an AR service according to an exemplary embodiment, which is applied to a first network element. The method includes following processing step.

At step 201, an SMF selection is executed, in which, executing the SMF selection includes selecting the SMF based on extended reality media (XRM) service indication information or an XRM group ID.

The first network element includes at least one of:
an access and mobility management function (AMF); or
a network repository function (NRF).

In embodiments of the disclosure, when the first network element is the AMF, in case that an SMF selection function in the AMF selects the SMF based on an SMF selection policy, the same SMF is selected for a session that supports an XRM service capability or has the same XRM group ID.

At least the following policy or related information is added in SMF selection subscription information in a unified data management (UDM): selecting the same SMF for a plurality of sessions with the XRM service indication information and/or the same XRM group ID.

In embodiments of the disclosure, as an implementation, in case that the first network element is the AMF, in local configuration policy of the AMF or SMF subscription information in the UDM, the XRM service indication information and/or the XRM group ID is taken as an input of the SMF selection for selecting the SMF.

In this way, the AMF selects the same SMF for the session related to the XRM service indication information or the XRM group ID.

In some embodiments of the disclosure, as an implementation, selecting the same SMF for the session that supports the XRM service capability and/or has the same XRM group ID includes:
selecting the same SMF for a plurality of sessions with the same data network name (DNN) and/or the same single network slice selection auxiliary information (S-NSSAI) and/or the same XRM group ID.

In embodiments of the disclosure, the XRM group ID is capable of reusing a group ID in an existing network .

As an implementation, in case that the SMF is not selected for the session related to the XRM service indication information or the XRM group ID, the SMF is selected based on the SMF selection policy.

As an implementation, in case that the SMF has been selected for the session related to the XRM service indication information or the XRM group ID, the same SMF is selected for a current related session.

As an implementation, in case that the SMF has been selected for the session related to the XRM service indication information or the XRM group ID, and the selected SMF is not capable of meeting a quality of service (QoS) requirement of the XRM service, an SMF is re-selected, and SMF reselection is initiated; and in case that there is a migratable protocol data unit (PDU) session in the old SMF, the PDU session in the old SMF is migrated to a new SMF.

On the basis of processing of the above step, the method in embodiments of the disclosure may further include:
in case that the NRF executes an SMF discovery selection, the AMF selects the same SMF for the session related to the XRM service indication information or the XRM group ID through the NRF.

As an implementation, in case that the first network element is the NRF, and the method further includes:
registering the SMF to the NRF, and obtaining a profile, in which SMF selection information of the NRF includes the XRM service indication information and/or the XRM group ID; and
marking, by the NRF, that the SMF is available.

FIG. 3 is a flow chart illustrating a method for selecting an SMF based on an AR service according to an exemplary embodiment of the disclosure. As illustrated in FIG. 2, FIG. 2 of embodiments of the disclosure illustrates a method for selecting an SMF based on an AR service according to an exemplary embodiment, which is applied to an AMF. The method includes following processing steps.

At step 301, the AMF selects the SMF based on XRM service indication information or an XRM group ID of an AR service.

In detail, the AMF executes the SMF selection, in which executing the SMF selection includes selecting the SMF based on the XRM service indication information or the XRM group ID of the AR service.

At step 302, the AMF selects the same SMF for a session that supports an XRM service capability or has the same XRM group ID. In the embodiments of the disclosure, in case that the SMF selection function in the AMF selects the SMF based on an SMF selection policy, the same SMF is selected for the session that supports the XRM service capability or has the same XRM group ID.

At least the following policy or related information is added in SMF selection subscription information in a UDM: selecting the same SMF for a plurality of sessions with the XRM service indication information and/or the same XRM group ID. In the embodiments of the disclosure, UDM subscription context may store data information of relevant subscription and dynamic, which is convenient for the AMF, the NRF or the like, when executing the SMF selection, to obtain the relevant SMF selection policy from the UDM subscription context, such as SMF selection subscription information. In general, the AMF or the NRF may select the SMF only based on a local policy, or determine the SMF in combination with the "SMF selection information", stored in the UDM obtained, from the UMD, or determine the SMF only from the "SMF selection information", stored in the UDM obtained, from the UMD.

In the embodiments of the disclosure, as an implementation, in local configuration policy of the AMF or SMF subscription information in the UDM, the AMF takes the XRM service indication information and/or the XRM group ID as the input of the SMF selection to select the SMF.

In this way, the AMF selects the same SMF for the session related to the XRM service indication information or the XRM group ID.

In embodiments of the disclosure, as an implementation, selecting, by the AMF, the same SMF for the session that supports the XRM service capability and/or has the same XRM group ID includes:
selecting the same SMF for a plurality of sessions with the same DNN and/or the same S-NSSAI and/or the same XRM group ID.

In embodiments of the disclosure, the XRM group ID is capable of reusing a group ID in an existing network.

As an implementation, in case that the SMF is not selected for the session related to the XRM service indication information or the XRM group ID, the AMF selects the SMF based on the SMF selection policy.

As an implementation, in case that the SMF has been selected for the session related to the XRM service indication information or the XRM group ID, the AMF selects the same SMF for a current related session.

As an implementation, in case that the SMF has been selected for the session related to the XRM service indication information or the XRM group ID, and the selected SMF is not capable of meeting a QoS requirement of the XRM service, the AMF re-selects a new SMF, and initiates the SMF reselection; and in case that there is a migratable PDU session in the old SMF, the PDU session in the old SMF is migrated to the new SMF.

On the basis of the processing of the above steps, the method in embodiments of the disclosure may further includes:
in case that the NRF executes an SMF discovery selections, the AMF selects the same SMF for the session related to the XRM service indication information or the XRM group ID through the NRF.

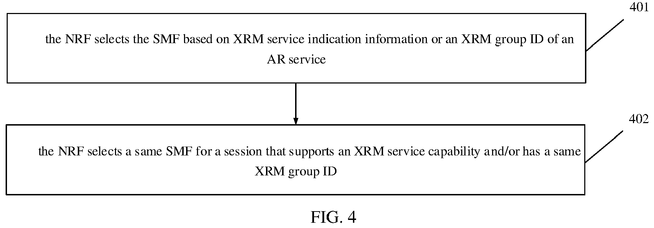

FIG. 4 is a flow chart illustrating a method for selecting an SMF based on an AR service according to an exemplary embodiment of the disclosure. As illustrated in FIG. 4, the method for selecting the SMF based on the AR service in embodiments of the disclosure is applied to a NRF. The method includes following processing steps.

At step 401, the NRF selects the SMF based on XRM service indication information or an XRM group ID of an AR service.

In detail, the NRF executes the SMF selection, in which executing the SMF selection includes selecting the SMF based on the XRM service indication information or the XRM group ID of the AR service.

At step 402, the NRF selects the same SMF for a session that supports an XRM service capability and/or has the same XRM group ID.

In embodiments of the disclosure, in case that the SMF selection function in the NRF selects the SMF based on an SMF selection policy, the same SMF is selected for the session that supports the XRM service capability or has the same XRM group ID.

At least the following policy or related information is added in SMF selection subscription information in a UDM: selecting the same SMF for a plurality of sessions with the XRM service indication information and/or the same XRM group ID. In embodiments of the disclosure, UDM subscription context may store data information of relevant subscription and dynamic, which is convenient for the NRF or the like, when executing the SMF selection, to obtain the relevant SMF selection policy from the UDM subscription context, such as SMF selection subscription information. In general, the NRF may select the SMF only based on a local policy, or determine the SMF in combination with the "SMF selection information", stored in the UDM obtained, from the UMD, or determine the SMF only from the "SMF selection information", stored in the UDM obtained, from the UMD.

In embodiments of the disclosure, in case that the NRF executes an SMF discovery selection, the AMF selects the same SMF for the session related to the XRM service indication information or the XRM group ID through the NRF. In this case, the SMF is registered to the NRF and a profile is provided to the NRF. The SMF selection information of the NRF includes the XRM service indication information and/or the XRM group ID; and the NRF marks that the SMF is available.

Description is further made below to the essence of the technical solution of embodiments of the disclosure with reference to a specific example.

In the SMF selection, the XRM service indication information or the XRM group ID is added. The same SMF is selected for the session that supports the XRM service capability or has the same XRM group ID in case that the SMF selection function in the AMF or the NRF executes the SMF selection. In this way, a subsequent XRM policy issuance, execution and a QoS update of a policy control function (PCF) may be triggered in coordination on the SMF. Simultaneously, selection of a subsequent XRM data flow path, such as user plane function (UPF) selection of the SMF, is more consistent. In this way, an existing QoS model mechanism may be reused as much as possible, and a QoS collaboration of a data stream related to the XRM service may be guaranteed to the greatest extent.

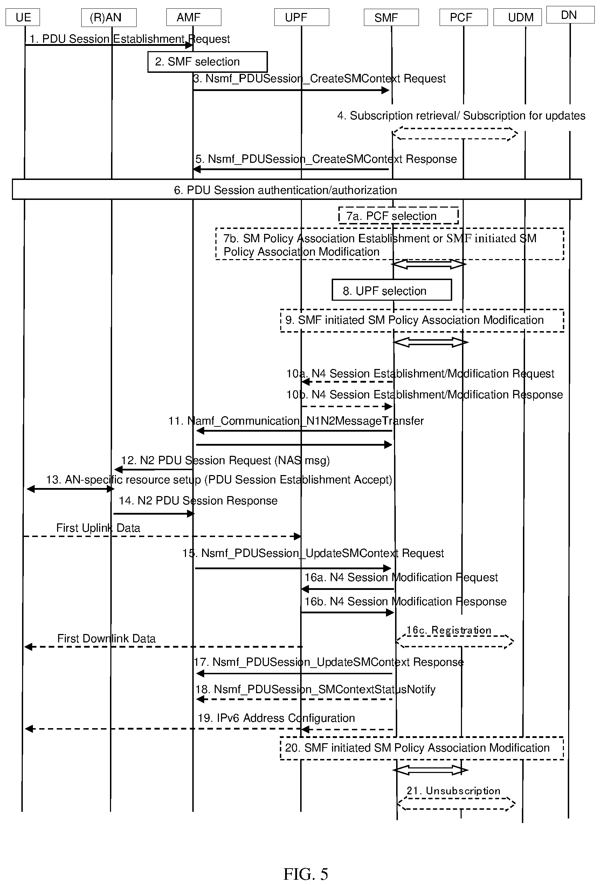

FIG. 5 is a flow chart illustrating a method for selecting an SMF based on an AR service according to an exemplary embodiment of the disclosure. As illustrated in FIG. 5, the method for selecting the SMF based on the AR service in embodiments of the disclosure includes following processing steps.

At step 1, the UE sends a PDU session establishment request to an AMF through a radio access network (RAN) or an access network (AN).

An N1 SM container carries the session establishment request. Alternatively, a request message carries a XRM service/multimodal service capability, which may be included in a 5GSM capability or a protocol configuration option (PCO), to inform the network that the UE supports the XRM service/multimodal service.

At step 2, the AMF selects an SMF, and executes an SMF selection based on an SMF selection function configured locally by the AMF or through a NRF. The AMF provides a location of the UE to the NRF, and the NRF provides a valid SMF instance in a corresponding service area. In addition to a factor of the SMF selection in the related art, the AMF also considers XRM service indication information or an XRM group ID for the SMF selection. For example, the same SMF is selected for a session related to the XRM service indication information or the XRM group ID.

Here, the XRM service indication information or the XRM group ID may be stored in a UDM subscription context (for example, in an SMF selection subscription information), or configured in a local SMF selection policy of the AMF, or stored in the SMF selection policy of the NRF.

The AMF takes the XRM service indication information or the XRM group ID as an input of the SMF selection and executes the SMF selection. In detail, in case that the AMF executes an SMF discovery selection, the SMF selection function in the AMF selects the same SMF for the session related to the XRM service indication information or the XRM group ID. In case that the NRF executes the SMF discovery selection, the AMF selects the same SMF for the session related to the XRM service indication information or the XRM group ID through the NRF.

In case that there is no SMF for the session related to the XRM service indication information or the XRM group ID, one of the SMF is selected based on the SMF selection policy.

In case that the SMF has been selected for the session related to the XRM service indication information or the XRM group ID, the same SMF is selected.

In case that the SMF has been selected for the session related to the XRM service indication information or the XRM group ID, but the SMF is not capable of meeting a QoS requirement of the XRM service, a new suitable SMF is re-selected, and an SMF relocation is initiated. The old SMF PDU session is migrated to the new SMF.

In case that the NRF executes the SMF discovery selection, the SMF is registered to the NRF, and the profile of the SMF is provided to the NRF. The SMF selection information of the NRF includes the XRM service indication information or the XRM group ID. The NRF marks that the SMF is available.

At step 3, alternatively, in case that the request message of the UE carries the XRM service/multimodal service capability, the AMF stores the XRM service/multimodal service capability in UE context. A request for creating an SM context is sent to the SMF selected at step 2, and the request message carries the N1 SM container at step 1 and the 5GSM core network capability including the XRM service/multimodal service capability.

At step 4, alternatively, in case that the XRM service/multimodal service capability is carried at step 1, the SMF checks subscription data. For example, it is confirmed whether the request conforms to a user subscription and a local policy, and whether the network supports the XRM service/multimodal service, if not, a session creation of the XRM service/multimodal service is rejected, or the session creation is received based on the local policy but the XRM service/multimodal service is not supported.

At step 5, the SMF sends a response message for creating the SM context to the AMF. In detail, the response message for creating the SM context is returned based on the SMF decision, or the response message is updated. In case that the session creation is rejected, a corresponding rejection reason value is carried. Alternatively, in case that supporting the XRM service/multimodal service is rejected, a corresponding reason value is carried for indicating that the 5GC does not support the XRM service/multimodal service.

At step 6, the core network performs authentication on the PDU session.

At step 7, in case that the PDU session employs a dynamic policy and charging control (PCC), the SMF executes PCF selection; otherwise, the SMF executes the local policy. The PDU session request supports the XRM service/multimodal service. The SMF and PCF generate/activate a corresponding XRM rule/multimodal data rule, or generate/activate a data stream PCC rule for enhancing supporting the XRM and multimodal session based on application information provided by the subscription and an application function (AF). As an example, for example, data streams of the XRM service are correlated, and the QoS of the XRM service and the multimodal service is matched, which includes a matching of a guaranteed flow bit rate (GFBR), a packet delay budget (PDB), and a default maximum data burst volume (MDBV) of the data streams of the XRM and the multimodal service.

At step 8, the SM selects the UPF.

At step 9, SMF initiated SM policy association modification is performed.

At step 10, the SMF sends an N4 session establishment/modification request to the PCF, and the PCF sends an N4 session establishment/modification response to the SMF.

At step 11, the SMF returns an N1N2 message to the AMF. PDU session creation accept is carried in the N1 SM container. The accept carries a relevant QoS parameter supporting the XRM service/multimodal data service. Alternatively, the corresponding XRM rule/multimodal data rule, or a QoS rule supporting XRM and multimodal data is carried for the UE to execute an association between XRM service data streams and to execute a QoS matching between XRM and multimodal data streams.

At step 12, the AMF sends an non access stratum (NAS) message to an radio access network ((R)AN), the NAS message carries a PDU session ID and a session accept message.

At step 13, the RAN forwards the NAS message at step 12 to the UE for execution.

At step 14, the RAN sends an N2 PDU session response message to the AMF, and sends first uplink data to the UPF.

At step 15, the AMF sends an Nsmf_PDUSession_UpdateSMContext Request to the SMF.

At step 16, the AMF sends the N4 session establishment/modification request to the UPF, and the UPF sends the N4 session establishment/modification response to the AMF.

The AMF initiates registration to the UDM.

At step 17, the SMF sends an Nsmf_PDUSession_UpdateSMContext Response to the AMF.

At step 18, the SMF sends an Nsmf_PDUSession_SMContextStatusNotify to the AMF.

At step 19, the SMF performs an IPv6 address configuration for the UE.

At step 20, the UPF initiates the SMF initiated SM policy association modification.

At step 21, unsubscription is performed between the SMF and the UDP.

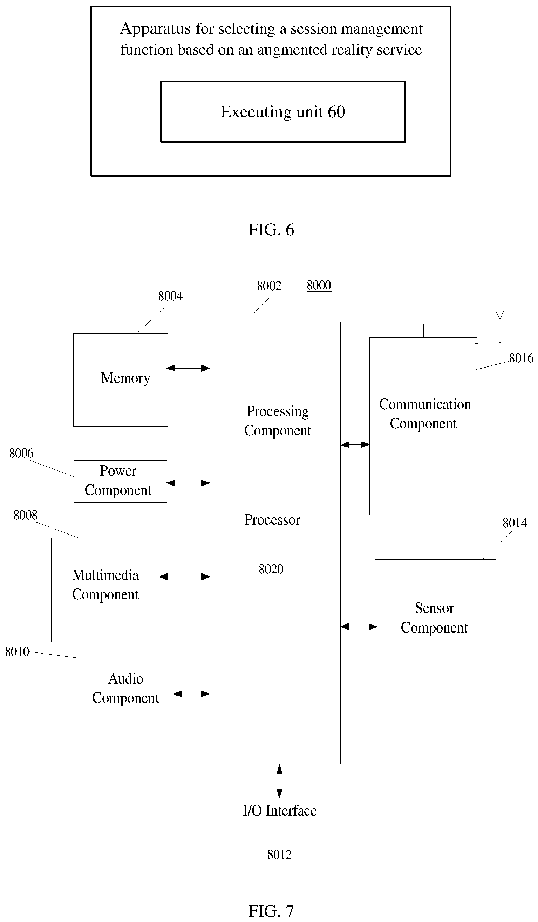

FIG. 6 is a block diagram illustrating an apparatus for selecting an SMF based on an AR service according to an exemplary embodiment of the disclosure. As illustrated in FIG. 6, the apparatus for selecting the SMF based on the AR service in embodiments of the disclosure is applied to a first network element. The apparatus includes:
an executing unit 60, configured to execute an SMF selection, in which executing the SMF selection includes selecting an SMF based on XRM service indication information or an XRM group ID.

In some exemplary embodiments of the disclosure, the first network element includes at least one of:
an AMF; or
a NRF.

In some exemplary embodiments of the disclosure, in case that the first network element is the AMF, on the basis of the apparatus for selecting the SMF based on the AR service, the apparatus further includes:
a first selecting unit (not illustrated in FIG. 6), applied in an SMF selection function in the AMF, and configured to, in case of selecting the SMF, select the same SMF for a session that supports an XRM service capability and/or has the same XRM group ID.

In some exemplary embodiments of the disclosure, on the basis of the apparatus for selecting the SMF based on the AR service, the apparatus further includes:
a setting unit (not illustrated in FIG. 6), configured to adding information: selecting the same SMF for a plurality of sessions with the XRM service indication information and/or the same XRM group ID, in SMF selection subscription information in a UDM.

In some exemplary embodiments of the disclosure, in case that the first network element is the AMF, the executing unit is further configured to:
in local configuration information of the AMF or SMF subscription information in a UDM, take the XRM service indication information and/or XRM group ID as an input of the SMF selection for selecting the SMF.

In some exemplary embodiments of the disclosure, on the basis of the apparatus for selecting the SMF based on the AR service, the apparatus further includes:
a second selecting unit (not illustrated in FIG. 6), configured to select the same SMF for the session related to the XRM service indication information or the XRM group ID.

In some exemplary embodiments of the disclosure, the first selecting unit is further configured to:
select the same SMF for a plurality of sessions with the same DNN and/or the same S-NSSAI and/or the same XRM group ID.

In some exemplary embodiments of the disclosure, the XRM group ID is capable of reusing a group ID in an existing network.

In some exemplary embodiments of the disclosure, the second selecting unit is further configured to:
select the SMF in case that the SMF is not selected for the session related to the XRM service indication information or the XRM group ID.

In some exemplary embodiments of the disclosure, the second selecting unit is further configured to select the same SMF for a current related session in case that the SMF has been selected for the session related to the XRM service indication information or the XRM group ID.

In some exemplary embodiments of the disclosure, the second selecting unit is further configured to: re-select an SMF and initiate SMF reselection in case that the SMF has been selected for the session related to the XRM service indication information or the XRM group ID, and the selected SMF is not capable of meeting a QoS requirement of an XRM service; and migrate, in case that there is the migratable PDU session in the old SMF, the PDU session in the old SMF to a new SMF.

In some exemplary embodiments of the disclosure, on the basis of the apparatus for selecting the SMF based on the AR service, the apparatus further includes:
a third selecting unit (not illustrated in FIG. 6), configured to select the same SMF for the session related to the XRM service indication information or the XRM group ID through the NRF, in case that the NRF executes a discovery SMF selection.

In some exemplary embodiments of the disclosure, in case that the first network element is the NRF, the SMF is registered to the NRF, and a profile is obtained, in which SMF selection information of the NRF includes the XRM service indication information and/or the XRM group ID; and
the NRF marks the SMF is available.

In an exemplary embodiment, the executing unit 60, the setting unit, the first selecting unit, the second selecting unit, the third selecting unit, and the like may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field-programmable gate arrays (FPGAs), general processors, controllers, micro controller units (MCUs), microprocessors, or other electronic components, or may be implemented in combination with one or more radio frequency (RF) antennas, to perform the steps of the method for selecting the SMF based on the AR service in the above embodiments.

In embodiments of the disclosure, a detailed manner in which each unit in the apparatus illustrated in FIG. 6 performs operations has been described in detail in the embodiments of the method, which is not described in detail here.

FIG. 7 is a block diagram illustrating a UE 8000 according to an embodiment of the disclosure. For example, the UE 8000 may be a mobile phone, a computer, a digital broadcasting terminal, a message sending and receiving equipment, a game controller, a tablet, a medical device, a fitness equipment, a personal digital assistant or the like.

Referring to FIG. 7, the UE 8000 may include one or more of the following components: a processing component 8002, a memory 8004, a power component 8006, a multimedia component 8008, an audio component 8010, an input/output (I/O) interface 8012, a sensor component 8014, and a communication component 8016.

The processing component 8002 typically controls overall operations of the UE 8000, such as the operations associated with display, telephone calls, data communications, camera operations, and recording operations. The processing component 8002 may include one or more processors 8020 to execute instructions to perform all or part of the steps in the above described methods. Moreover, the processing component 8002 may include one or more modules which facilitate the interaction between the processing component 8002 and other components. For example, the processing component 8002 may include a multimedia module to facilitate the interaction between the multimedia component 8008 and the processing component 8002.

The memory 8004 is configured to store various types of data to support the operation of the UE 8000. Examples of such data include instructions for any applications or methods operated on the UE 8000, contacts data, phonebook data, messages, pictures, video, etc. The memory 8004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 8006 provides power to various components of the UE 8000. The power component 8006 may include a power management system, one or more power sources, and any other components associated with the generation, management, and distribution of power in the UE 8000.

The multimedia component 8008 includes a screen providing an output interface between the UE800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 8008 includes a front camera and/or a rear camera. The front camera and the rear camera may receive an external multimedia datum while the UE 8000 is in an operation mode, such as a photographing mode or a video mode. Each of the front camera and the rear camera may be a fixed optical lens system or have focus and optical zoom capability.

The audio component 8010 is configured to output and/or input audio signals. For example, the audio component 8010 includes a microphone ("MIC") configured to receive an external audio signal when the UE 8000 is in an operation mode, such as a call mode, a recording mode, and a speech recognition mode. The received audio signal may be further stored in the memory 8004 or transmitted via the communication component 8016. In some embodiments, the audio component 8010 further includes a speaker to output audio signals.

The I/O interface 8012 provides an interface between the processing component 8002 and peripheral interface modules. The peripheral interface modules may be such as keyboards, click wheels, buttons, and the like. The buttons may include, but be not limited to, a home button, a volume button, a starting button, and a locking button.

The sensor component 8014 includes at least one sensor to provide status assessments of various aspects of the UE 8000. For example, the sensor component 8014 may detect an open/closed status of the UE 8000, relative positioning of components, e.g., the display and the keypad, of the UE 8000, a change in a position of the UE 8000 or a component of the UE 8000, a presence or absence of a user contacting with the UE 8000, an orientation or an acceleration/deceleration of the UE 8000, and a change in temperature of the UE 8000. The sensor component 8014 may include a proximity sensor configured to detect the presence of nearby objects without any physical contact. The sensor component 8014 may also include a light sensor, such as a CMOS or CCD image sensor, for use in an imaging application. In some embodiments, the sensor component 8014 may also include an accelerometer sensor, a gyroscope sensor, a magnetic sensor, a pressure sensor, or a temperature sensor.

The communication component 8016 is configured to facilitate communication, wired or wirelessly, between the UE 8000 and other devices. The UE 8000 may access a wireless network based on a communication standard, such as Wi-Fi, 2G, or 3G, or a combination thereof. In an exemplary embodiment, the communication component 8016 receives a broadcast signal or broadcast associated information from an external broadcast management system via a broadcast channel. In an exemplary embodiment, the communication component 8016 also includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the UE 8000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the actions of the above method for selecting the SMF based on the AR service.

In an exemplary embodiment, there is also provided a non-transitory computer-readable storage medium including instructions, such as the memory 8004 including instructions. The instructions may be executed by the processor 8020 of the UE 8000 to complete the steps of the above method for selecting the SMF based on the AR service. For example, the non-transitory computer-readable storage medium may be the ROM, the random access memory (RAM), the CD-ROM, the magnetic tape, the floppy disk, the optical data storage device and the like.

Embodiments of the disclosure also record a storage medium having an executable program stored thereon. The executable program is executed by a processor to perform the steps of the above method for selecting the SMF based on the AR service in the above embodiments.

Other implementations of the disclosure may be apparent to the skilled in the art from consideration of the specification and practice of the disclosure disclosed here. The disclosure is intended to cover any variations, uses, or adaptations of embodiments of the disclosure following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the exaction construction that has been described above and illustrated in the accompanying drawings, and that various modifications and changes may be made without departing from the scope thereof. The scope of embodiments of the disclosure only is limited by the attached claims.

## Claims

1. A method for selecting a session management function (SMF) based on an augmented reality (AR) service, applied to a first network element, comprising:
executing an SMF selection, wherein executing the SMF selection comprises selecting an SMF based on extended reality media (XRM) service indication information or an XRM group identification (ID).

2. The method of claim 1, wherein the first network element comprises at least one of:
an access and mobility management function (AMF); or
a network repository function (NRF).

3. The method of claim 2, wherein in case that the first network element is the AMF, the method further comprises:
when selecting the SMF, selecting the same SMF for a session that supports an XRM service capability or has the same XRM group ID.

4. The method of claim 1, further comprising:
adding information in SMF selection subscription information in a unified data management (UDM):
selecting the same SMF for a plurality of sessions with the XRM service indication information and/or the same XRM group ID.

5. The method of claim 2, wherein in case that the first network element is the AMF, the method further comprises:
in local configuration information of the AMF or SMF subscription information in a unified data management (UDM), taking the XRM service indication information and/or the XRM group ID as an input of the SMF selection for selecting the SMF.

6. The method of claim 5, further comprising:
selecting, by the AMF, the same SMF for a session related to the XRM service indication information or the XRM group ID.

7. The method of claim 3, wherein selecting the same SMF for the session that supports the XRM service capability or has the same XRM group ID comprises:
selecting the same SMF for a plurality of sessions with the same data network name (DNN) and/or the same single network slice selection auxiliary information (S-NSSAI) and/or the same XRM group ID.

8. The method of any of claims 1 to 7, wherein the XRM group ID is capable of reusing a group ID in an existing network.

9. The method of claim 5 or 6, wherein in case that the SMF is not selected for the session related to the XRM service indication information or the XRM group ID, the SMF is selected.

10. The method of claim 5 or 6, wherein in case that the SMF has been selected for the session related to the XRM service indication information or the XRM group ID, the same SMF is selected for a current related session.

11. The method of claim 5 or 6, wherein in case that the SMF has been selected for the session related to the XRM service indication information or the XRM group ID, and the selected SMF is not capable of meeting a quality of service (QoS) requirement of an XRM service, an SMF reselection is performed; and in case that there is a migratable protocol data unit (PDU) session in the selected SMF, the migratable PDU session is migrated to a new SMF.

12. The method of claim 5 or 6, further comprising:
in case that the NRF executes an SMF discovery selection, selecting, by the AMF, the same SMF for a session related to the XRM service indication information or the XRM group ID through the NRF.

13. The method of claim 2, wherein in case that the first network element is the NRF, the method further comprises:
registering the SMF to the NRF, and obtaining a profile, wherein SMF selection information of the NRF comprises the XRM service indication information and/or the XRM group ID; and
marking, by the NRF, that the SMF is available.

14. An apparatus for selecting a session management function (SMF) based on an augmented reality (AR) service, applied to a first network element, comprising:
an executing unit, configured to execute an SMF selection, wherein executing the SMF selection comprises selecting an SMF based on extended reality media (XRM) service indication information or an XRM group identification (ID).

15. The apparatus of claim 14, wherein the first network element comprises at least one of:
an access and mobility management function (AMF); or
a network repository function (NRF).

16. A storage medium having an executable program stored thereon, wherein when the executable program is executed by a processor, the method for the SMF selection based on the AR service according to any one of claims 1 to 13 is implemented.
